# EUROPEAN PATENT APPLICATION

(11) **EP 1 306 714 A1**
(43) Date of publication of application: **02.05.2003**
(21) Application number: 00948325.6
(22) Date of filing: 28.07.2000
(51) Int. Cl.: G02F 1/1335, G02F 1/1333

(54) **LIQUID-CRYSTAL DISPLAY DEVICE**

(71) Applicant: MITSUBISHI DENKI KABUSHIKI KAISHA, Tokyo 100-8310 (JP)
(72) Inventor: TAMAKI, Yasuyuki Mitsubishi Denki Kabushiki Kaisha, Chiyoda-ku, Tokyo 100-8310 (JP); TAKEMOTO, Makoto Mitsubishi Denki Kabushiki Kaisha, Chiyoda-ku, Tokyo 100-8310 (JP); SUGAWARA, Naoto, Mitsubishi Denki Kabushiki Kaisha, Chiyoda-ku, Tokyo 100-8310 (JP)
(74) Representative: Sajda, Wolf E., Dipl.-Phys.
(86) International application number: JP0005117
(87) International publication number: WO02010854

(57) **Abstract**

A liquid-crystal display device comprises a front-light unit (200a) including a frame (151) and a holder (112). The frame (151) includes holes (161a, 162a, 163a, 164a) to be engaged with claws (114, 115, 116, 117) provided on the hoder (112). This structure facilitates fixing the holder (112) to the frame (151) and allows a liquid-crystal panel (120) and a light-guide plate (132) to be fixed between the frame (151) and the holder (112). Since there is no need for the conventional claws on the light-guide plate (132), lines are prevented from appearing on the screen.

## Description

### Technical Field

The present invention relates to a liquid crystal display and, more particularly, to a liquid crystal display having superior optical characteristics.

### Background Art

Conventionally, a liquid crystal display has been known as a display device. The liquid crystal display has been used widely as displays of personal computers as well as display devices for personal digital assistants including portable telephones.

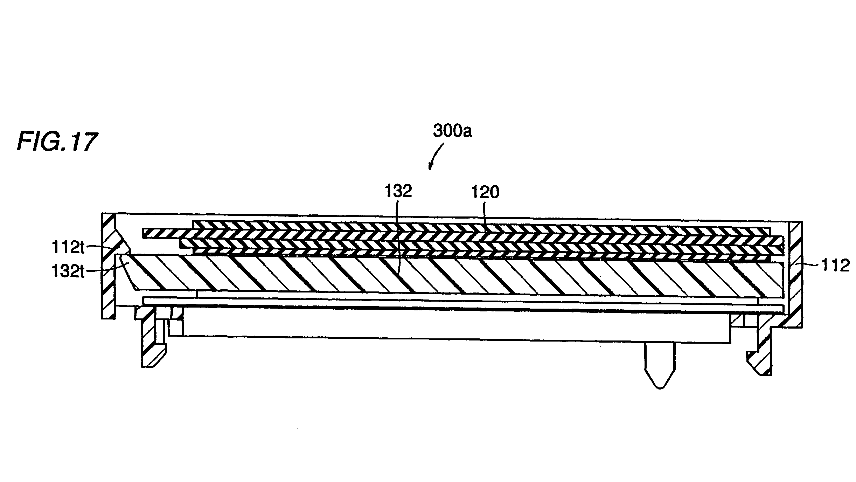

Fig. 17 is a cross section of a liquid crystal display 300a used in a conventional portable telephone. Liquid crystal display 300a includes a holder 112 fixed on a main substrate (not shown) provided in the portable telephone, and at prescribed positions of holder 112, has a liquid crystal panel 120 and an optical guide plate 132. Light emitted from an LED (Light Emitting Diode: not shown) as a light source is reflected by optical guide plate 132, and illuminates liquid crystal panel 120 from the back surface side. The device of this type in which optical guide plate 132 is provided behind liquid crystal panel 120 is referred to as a back light type device.

In the back light type liquid crystal display 300a, the light emitted from the LED is directed to liquid crystal panel 120 through optical guide plate 132. Of the light beams directed to liquid crystal panel 120, only the light beams that has passed through liquid crystal panel 120 are emitted thereabove. The emitted light beams are recognized visually, so that one recognizes letters and characters displayed on liquid crystal panel 120.

Optical guide plate 132 is fixed on holder 112, by engaging a holder pawl 112t provided on an inner surface of a sidewall of holder 112 with an optical guide plate pawl 132t provided at an end surface of optical guide plate 132.

Recently, a liquid crystal display having higher performance has been in demand. More specifically, color display, improved luminance (brightness) and improved saturation (chroma) of liquid crystal display have been desired. To meet such demands, a so-called front light type liquid crystal display has been developed, in which the optical guide plate is positioned on the display surface side of the liquid crystal panel.

Generally, at the time of illumination emission, luminance is higher in a front light type device, as the front light type device has higher reflectance than the transmittance of the back light type device. Therefore, even when a color filter is provided on the display surface side of the liquid crystal panel for color display, luminance does not decrease in the front light type device.

When the optical guide plate is fixed on the holder of the front light type liquid crystal display by using similar structure as that for the back light type device shown in Fig. 17, the following problem may arise.

The optical guide plate pawl provided at an end surface area of the optical guide plate may be formed by a protruding area at a peripheral surface of the optical guide plate. Therefore, it is possible that at the area of the optical guide plate pawl, the light beams guided into the optical guide plate are diffused, resulting in strip shaped light beams (hereinafter referred to as bright lines) in the optical guide plate. In the back light type device, the liquid crystal panel is arranged on the surface side of the optical guide plate, and therefore, even when there are bright lines, there is no influence of the bright lines on the liquid crystal panel which is viewed by the user.

In the front light type device, however, the optical guide plate is arranged on the display surface side of the liquid crystal panel, and therefore the bright lines, if generated, are directly recognized visually. This is optically disadvantageous as the display of the liquid crystal panel becomes hard to view, and in addition, appearance of the device would be degraded.

The present invention was made to solve the above described problem, and its object is to provide a liquid crystal display that does not cause such disadvantages in optical characteristics and appearance of the optical guide plate.

### Disclosure of the Invention

The liquid crystal display device in accordance with the present invention includes a liquid crystal panel, a liquid crystal panel holding member holding the liquid crystal panel therein, and a light unit including light source means and an optical guide plate directing light beams emitted from the light source means to the liquid crystal panel, wherein the light unit has a frame member holding the light source means and optical guide plate, and between the liquid crystal panel holding member and a frame member, engaging means are provided respectively, to be engaged with each other.

In the liquid crystal display structured as described above, the light unit and optical guide plate are positioned and fixed on the liquid crystal panel holding member by the frame member. Therefore, it becomes unnecessary to provide the optical guide plate pawl for positioning and fixing on the optical guide plate, and therefore, generation of bright lines can be prevented.

At the time of assembly of the liquid crystal display, the light unit and the optical guide plate are accurately positioned on the liquid crystal panel holding member, and therefore, assembly of a portable telephone is facilitated.

In a preferred embodiment of the above described invention, the optical guide plate is arranged on the display surface side of the liquid crystal panel such that the light beams emitted from the light source means are directed to the liquid crystal panel.

In the liquid crystal display structured in this manner, a so-called front light type device is realized. Thus, a liquid crystal display having high optical quality can be provided in which disadvantages in appearance and in optical characteristic such as difficulty in viewing the liquid crystal panel because of generation of bright lines on the optical guide plate as described above are prevented.

In a preferred embodiment of the above described invention, the frame member has a surrounding frame area extending on the surface side of the optical light plate, defining a display screen of the liquid crystal panel.

Though the display screen of the liquid crystal panel has been conventionally defined by other member, this structure enables defining the display screen of the liquid crystal panel by the frame member.

In a preferred embodiment of the above described invention, an electronic component is provided on a substrate constituting the liquid crystal panel, and the frame member has a shield frame area covering the electronic component. In a preferred embodiment of the above described invention, a ground potential setting mechanism is provided for setting the frame member to the ground potential. In a preferred embodiment of the above described invention, the frame member includes the ground potential setting mechanism. Because of this configuration, it becomes possible to readily protect the electronic component from static electricity, and reliability of a portable telephone can be improved.

In a preferred embodiment of the above described invention, the frame member has a holding frame holding a circuit component.

By this structure, it becomes possible to incorporate a circuit component such as a receiver in advance in a liquid crystal display, further facilitating assembly of a portable telephone.

In a preferred embodiment of the above described invention, between the liquid crystal panel holding member and the frame member, positioning means are provided for relative positioning, respectively.

Because of this structure, the frame member can be surely positioned with respect to the liquid crystal panel holding member, further facilitating assembly of the liquid crystal display.

### Brief Description of the Drawings

Fig. 1 is a plan view of a portable telephone having a liquid crystal display in accordance with Embodiment 1.
Fig. 2 is a cross section taken along the line II-II of Fig. 1.
Fig. 3 is an exploded perspective view of the liquid crystal display including a front light unit 200a in accordance with Embodiment 1.
Fig. 4 is a cross section taken along the line IV-IV of Fig. 3.
Fig. 5 is a plan view of the liquid crystal display including front light unit 200a in accordance with Embodiment 1.
Fig. 6 is a plan view of the liquid crystal display including a front light unit 200b in accordance with Embodiment 2.
Fig. 7 is a vertical section of the liquid crystal display including a front light unit 200c in accordance with Embodiment 3.
Fig. 8 is a vertical section of the liquid crystal display including a front light unit 200d in accordance with Embodiment 4.
Fig. 9 is a cross section of the liquid crystal display including a front light unit 200e in accordance with Embodiment 5.
Fig. 10 is a cross section of the liquid crystal display including a front light unit 200f in accordance with Embodiment 6.
Fig. 11 is a vertical section of the liquid crystal display including a front light unit 200g in accordance with Embodiment 7.
Fig. 12 is a perspective view of the frame as a whole in accordance with Embodiment 7.
Fig. 13 is a vertical section of the liquid crystal display including a front light unit 200h in accordance with Embodiment 8.
Fig. 14 is a plan view of the liquid crystal display including front light unit 200h in accordance with Embodiment 8.
Fig. 15 is a cross section showing the liquid crystal display including a front light unit 200i in accordance with another example in accordance with Embodiment 8.
Fig. 16 is a plan view of the liquid crystal display including a front light unit 200j in accordance with Embodiment 9.
Fig. 17 is a cross section of a conventional liquid crystal display 300a.

### Best Mode for Carrying Out the Invention

In the following, embodiments of the present invention will be described with reference to the figures.

### (Embodiment 1)

### (Structure)

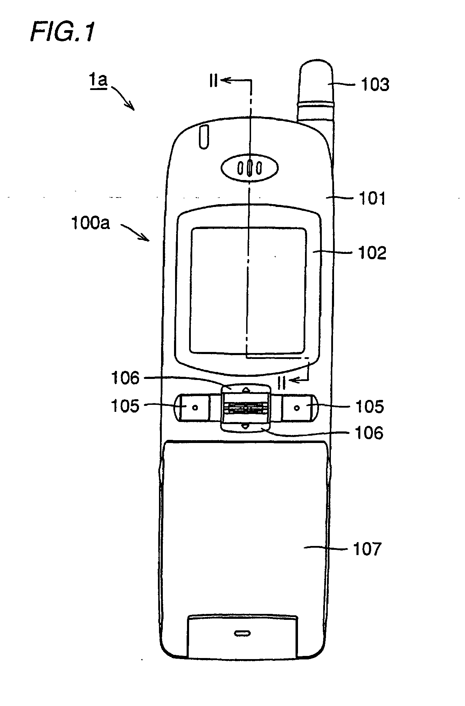

Fig. 1 is a plan view of a portable telephone 1a having the liquid crystal display in accordance with Embodiment 1 of the present invention. Referring to Fig. 1, portable telephone 1a has a front case 101, a protective window 102, an operation key 105, a multifunction switch 106, a flip 107 and a liquid crystal display 100a. Flip 107 may or may not be provided dependent on the types of portable telephone 1a.

Front case 101 constitutes a casing of portable telephone 1a. Various members are attached to front case 101. Protective window 102 is provided at an opening portion of front case 101. Protective window 102 is formed of a transparent member, and serves to prevent application of external pressure or the like to liquid crystal display 100a accommodated in front case 101.

An antenna 103 is attached to a tip end portion of front case 101 for transmitting and receiving electromagnetic waves. Most part of antenna 103 is accommodated within front case 101, and at the time of use of portable telephone 1a, antenna 103 is extended.

Operation key 105 is provided at a central portion of portable telephone 1a. Operation key 105 is a member for entering information by manual pressing, and it includes a plurality of keys.

Between adjacent operation keys 105, a multifunction switch 106 is provided. Information entered by operation key 105 or multifunction switch 106 is displayed on liquid crystal display 100a. Flip 107 is provided to cover front case 101.

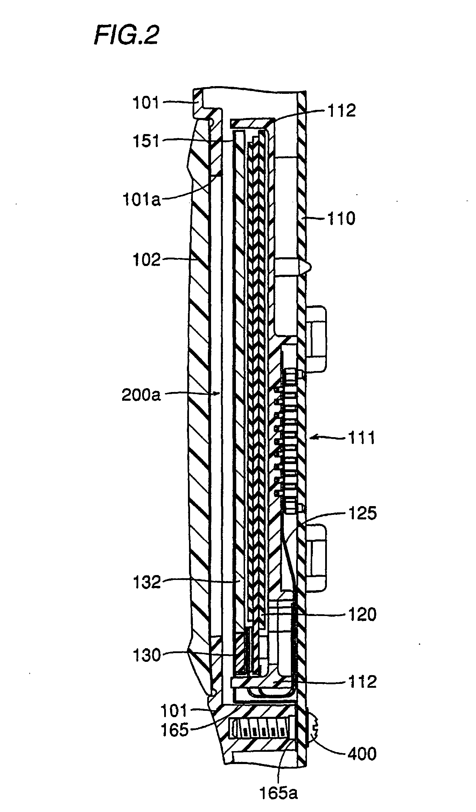

Fig. 2 is a cross section taken along the line II-II of Fig. 1. Referring to Fig. 2, liquid crystal display 100a includes a main substrate 110, a liquid crystal panel 120 consisting of a stacked structure of a liquid crystal layer, a glass substrate and a deflecting plate, a holder 112 as a liquid crystal panel holding member holding liquid crystal panel 120 therein, and a front light unit 200a. A connector 111 electrically connected to liquid crystal panel 120 for feeding power to liquid crystal panel 120 is attached to main substrate 110. Further, along an outer surface of holder 112, an FPC (Flexible Printed Circuit) 125 is provided.

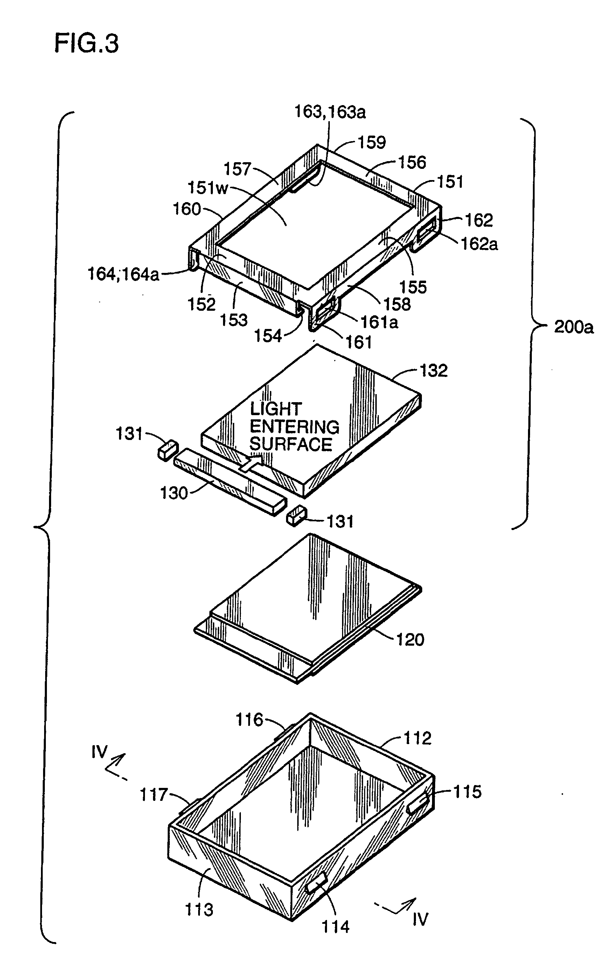

Front light unit 200a includes LEDs 131, 131 (see Fig. 3); a light tube 130 converting point light sources emitted from LEDs 131, 131 to linear light source; a transparent optical guide plate 132 formed of acrylic resin or the like positioned on the display surface side of liquid crystal panel 120 for directing the light beams emitted from light tube 130 to liquid crystal panel 120; and a frame member 151 referred to as a reflector enclosing and holding LEDs 131, 131 and light tube 130. Front light unit 200a is held by holder 112. Light tube 131 and LEDs 131, 131 constitute light source means. Liquid crystal display 100a is the so-called front light type device, as optical guide plate 132 is positioned on the display surface side of liquid crystal panel 120.

Above the main substrate 110, front case 101 is positioned. Front case 101 has an opening 101a, and protective window 102 is provided to cover opening 101a. Protective window 102 serves to prevent application of external force to front light unit 200a.

Light beams emitted from LEDs 131, 131 are directed through light tube 130 to optical guide plate 132 and to liquid crystal panel 120. The light entering liquid crystal panel 120 reaches human eyes, so that letters and characters displayed on liquid crystal panel 120 can be visually recognized.

### (Structure for fixing optical guide plate 132 and liquid crystal panel 120)

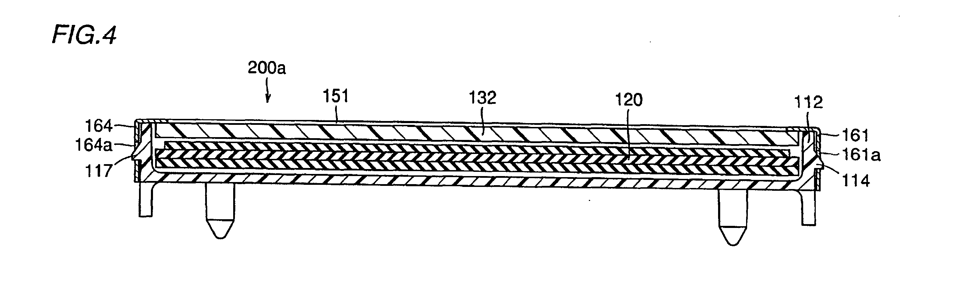

Next, referring to Figs. 3 and 4, the structure for fixing liquid crystal panel 120 and optical guide plate 132 to holder 112 using frame member 151 will be described. Fig. 3 is an exploded perspective view of the liquid crystal display including front light unit 200a in accordance with Embodiment 1, and Fig. 4 is a cross section taken along the line IV-IV of Fig. 3.

Frame member 151 includes LEDs 131, 131 light tube 130 and optical guide plate 132, forming front light unit 200a. Frame member 151 has base frame areas 152, 153; surrounding frame areas 155, 156 and 157 defining an opening 151W; side frame areas 158, 159 and 160 provided for respective surrounding frame areas for preventing leakage of light from end surfaces of optical guide plate 132; and engaging frame areas 161, 162, 163 and 164 respectively provided with engaging holes 161a, 162a, 163a and 164a, which are engaged with respective engaging pawls (described later) provided on holder 112. It is preferred in view of manufacturing technique and necessary cost that frame member 151 is formed by press work. It is possible, however, to manufacture a frame having similar structure by other manufacturing technique.

On an outer peripheral surface of frame number 113 of holder 112, engaging pawls 114, 115, 116 and 117, which will be engaged with engaging holes 161a, 162a, 163a and 164a, are provided.

When holder 112 and frame member 151 having the above described structures are used, LEDs 131, 131, light tube 130 and optical guide plate 132 are enclosed and held by base frame areas 152 and 153 and, in addition, engaging pawls 114, 115, 116 and 117 are engaged with engaging holes 161a, 162a, 163a and 164a of frame member 151 as shown in the cross section of Fig. 4, so that frame member 151 is fixed in holder 112. As a result, front light unit 200a and liquid crystal panel 120 are fixed in holder 112.

### (Functions·Effects)

In the liquid crystal display 100a structured as described above, front light unit 200a and optical guide plate 132 are positioned and fixed on holder 112 by frame member 151. Therefore, it becomes unnecessary to provide optical guide plate pawls for positioning and fixing on optical guide plate 132, and therefore generation of bright lines can be prevented.

As a result, disadvantages in appearance and optical characteristics such as difficulty in viewing liquid crystal panel 120 caused by the generation of bright lines can be avoided, and a liquid crystal display having high optical quality can be provided. Further, at the time of assembly of the liquid crystal display, assembly of a portable telephone is facilitated, as front light unit 200a and optical guide plate 132 are accurately positioned on holder 112.

### (Other Example)

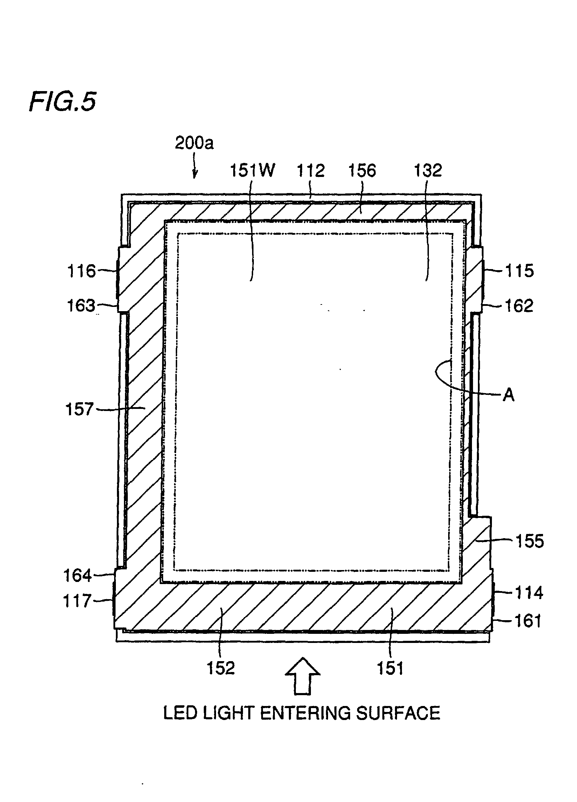

In the frame member 151 having such a structure, a modification such as shown in Fig. 5 is possible. Fig. 5 is a plan view of the liquid crystal display including front light unit 200a. In this example, base frame area 152 (hatched area in the figure) and surrounding frame areas 155, 156 and 157 (hatched areas in the figure) defining opening 151W of frame member 151 are provided enlarged to the side of opening 151W. By adopting this shape, it becomes possible to define the display screen of the opening that has been defined by opening 101a or protective window 102 of front case 101 by base frame area 152 and surrounding frame areas 155, 156 and 157, so that highly precise dimensional design of opening 101a or back silk printing conventionally provided on protective window 102 becomes unnecessary. Therefore, manufacturing cost of a portable telephone can be reduced.

### (Embodiment 2)

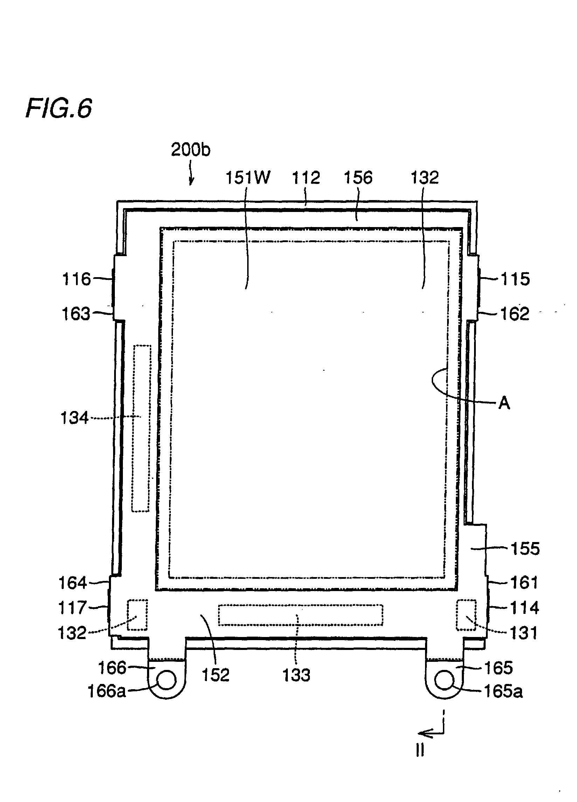

Referring to Fig. 6, a liquid crystal display in accordance with Embodiment 2 of the present invention will be described. Fig. 6 is a plan view of the liquid crystal display including front light unit 200b of the present embodiment.

### (Structure)

Basic structure of the liquid crystal display and front light unit 200b in accordance with the present embodiment is the same as that of liquid crystal display 100a and front light unit 200a of Embodiment 1 described above. The difference is as follows. In front light unit 200b, a COG (Chip On Glass) is employed in which LEDs 131, 131 and drivers 133, 134 of liquid crystal panel 120 are arranged on a glass substrate constituting liquid crystal panel 120, drivers 133, 134 are covered by frame member 151 for protection against static electricity, and frame member 151 is set to the ground potential (GND).

In order to set the frame member 151 to the ground potential (GND), a ground potential setting mechanism is formed by providing grounding frames 165, 166 having openings 165a, 166a on frame member 151 and connecting to a grounding area (not shown) provided on main substrate 110 as shown in the cross section of Fig. 2, and by joining together the ground frames 165, 166 and main substrate 110 to front case 101, using a fixing screw 400 of main substrate 110.

In view of manufacturing technique and necessary cost, it is preferred that the frame member 151 having grounding frames 165 and 166 is formed by press work. It is possible, however, to manufacture a frame having similar structure by other manufacturing technique.

### (Functions·Effects)

By the above described structure, similar functions and effects as Embodiment 1 can be obtained. Further, as the frame member 151 is set to the ground potential (GND), drivers of liquid crystal panels and LEDs can be protected, whereby reliability of the portable telephone is improved.

Further, as a structure in which grounding frames 165, 166 and main substrate 110 are joined together to the front case 101, assembly of the portable telephone is facilitated.

### (Embodiment 3)

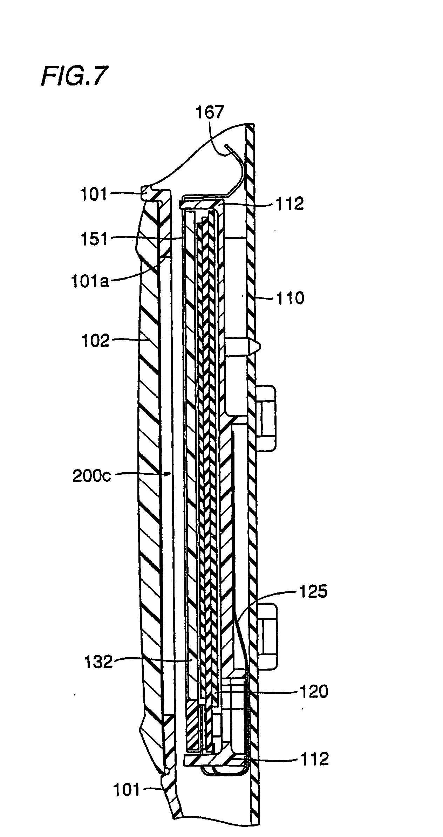

Referring to Fig. 7, the liquid crystal display in accordance with Embodiment 3 of the present invention would be described. Fig. 7 is a vertical section showing a structure of the liquid crystal device including front light unit 200c of the present embodiment.

### (Structure)

The basic structure of the liquid crystal display and front light unit 200c of the present embodiment is the same as liquid crystal display 100a and front light units 200a and 200b of Embodiments 1 and 2 described above. The difference is as follows. In front light unit 200c, as a structure for setting frame member 151 to the ground potential (GND), the ground potential setting mechanism is formed by providing a spring terminal 167 formed from a part of frame member 151, to be connected to the ground area of main substrate 110.

In view of manufacturing technique and necessary cost, it is preferred that frame member 151 having spring terminal 167 is formed by press work. It is possible, however, to form a frame having similar structure by other manufacturing technique.

### (Functions·Effects)

By this structure also, similar functions and effects as Embodiments 1 and 2 above can be obtained.

### (Embodiment 4)

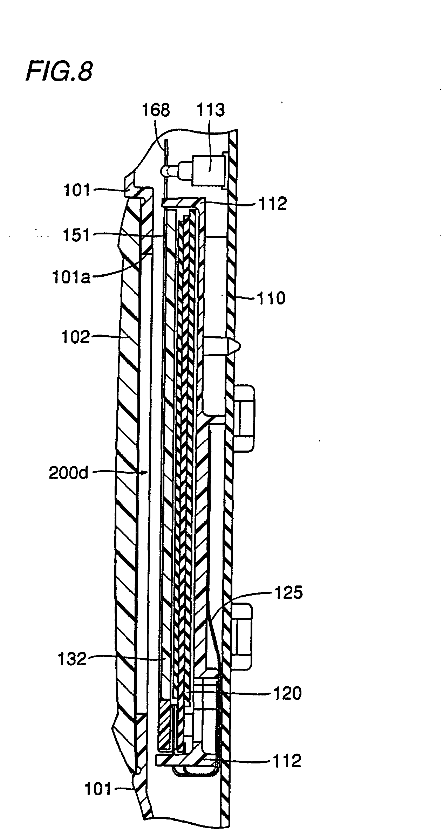

Referring to Fig. 8, the liquid crystal display device in accordance with Embodiment 4 of the present invention will be described. Fig. 8 is a vertical section representing the structure of the liquid crystal display including front light unit 200d of the present embodiment.

### (Structure)

The basic structure of the liquid crystal display and front light unit 200d of the present embodiment is the same as liquid crystal display 100a and front light units 200a to 200c of Embodiments 1 to 3 described above. The difference is as follows. In the front light unit 200d, as the structure for setting frame member 151 to the ground potential (GND), the ground potential setting mechanism is formed by providing a grounding connector 113 on main substrate 110 and providing a ground terminal 168 extending to be in contact with connector 113 at a portion of frame member 151.

In view of manufacturing technique and necessary cost, it is preferred that frame member 151 having ground terminal 168 is formed by press work. It is possible, however, to form a frame having similar structure by other manufacturing technique.

### (Functions · Effects)

By this structure also, similar functions and effects as Embodiments 1 and 2 above can be obtained.

### (Embodiment 5)

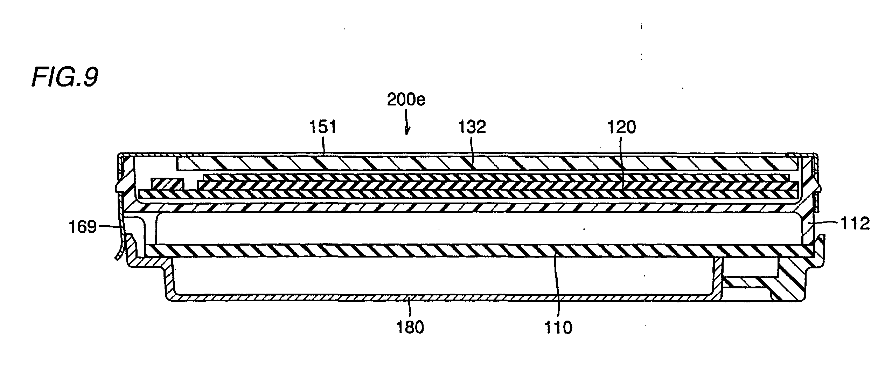

Referring to Fig. 9, the liquid crystal display in accordance with Embodiment 5 of the present invention will be described. Fig. 9 is a vertical section representing a structure of the liquid crystal display including front light unit 200e of the present embodiment.

### (Structure)

The basic structure of the liquid crystal display and front light unit 200e of the present embodiment is the same as that of liquid crystal display 100a and front light unit 200a to 200d of Embodiments 1 to 4 above. The difference is as follows. In front light unit 200e, as a structure for setting frame member 151 to the ground potential (GND), the ground potential setting mechanism is formed by arranging a shield member 180 on a back surface side of main substrate 110, and providing a spring terminal 169 to be in contact with shield member 180 on frame member 151.

In view of manufacturing technique and necessary cost, it is preferred that frame member 151 having spring terminal 169 is formed by press work. It is possible, however, to manufacture a frame having similar structure by other manufacturing technique.

### (Functions·Effects)

By this structure also, similar functions and effects as Embodiments 1 and 2 above can be obtained.

### (Embodiment 6)

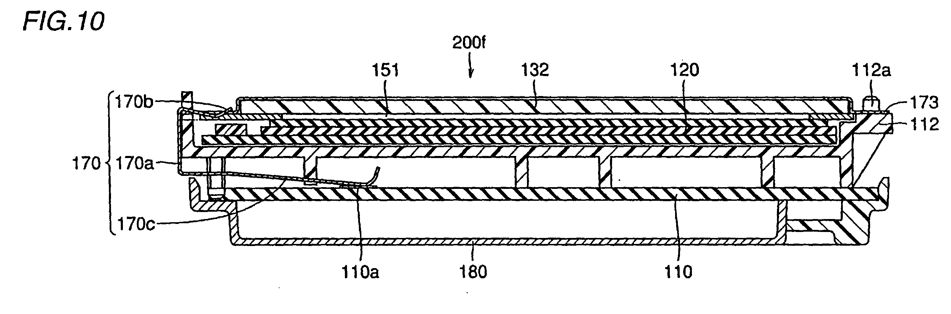

Referring to Fig. 10, the liquid crystal display in accordance with Embodiment 6 of the present invention will be described. Fig. 10 is a vertical section representing a structure of the liquid crystal display including front light unit 200f of the present embodiment.

### (Structure)

The basic structure of the liquid crystal display and front light unit 200f of the present embodiment is the same as that of liquid crystal display 100a and front light units 200a to 200e in accordance with Embodiments 1 to 5 described above. The difference is as follows. In front light unit 200f, as the structure for setting frame member 151 to the ground potential (GND), the ground potential setting mechanism is formed by providing a clip 170 for electrically connecting frame member 151 with ground area 110a of main substrate 110. Clip 170 has a base portion 170a, a frame side terminal 170b to be in contact with frame member 151, and a ground area side terminal 170b to be in contact with ground area 110a.

### (Functions·Effects)

By this structure also, similar functions and effects as Embodiments 1 and 2 above can be obtained.

### (Embodiment 7)

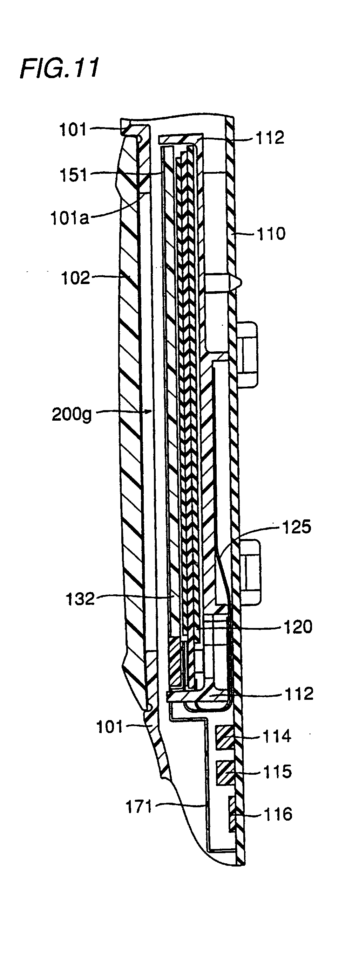

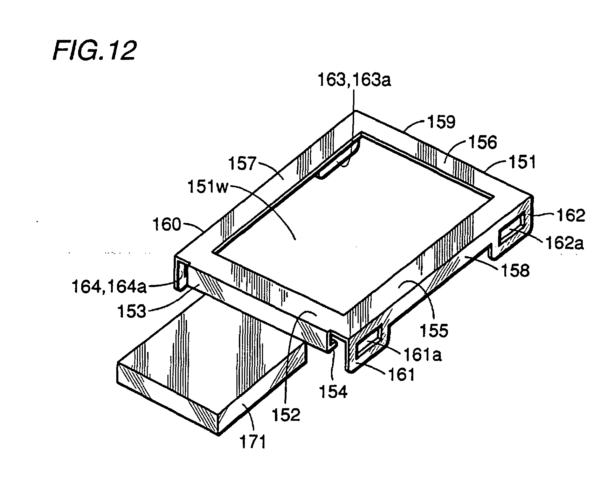

Referring to Figs. 11 and 12, the liquid crystal display in accordance with Embodiment 7 of the present invention will be described. Fig. 11 is a vertical section representing a structure of the liquid crystal display including front light unit 200g in accordance with the present embodiment, and Fig. 12 is a perspective view of frame member 151 as a whole.

### (Structure)

The basic structure of the liquid crystal display and front light unit 200g of the present embodiment is the same as that of liquid crystal display 100a and front light units 200a to 200f of Embodiments 1 to 6 described above. The difference is as follows. In front light unit 200g, circuit components 114, 115 and 116 provided on main substrate 110 are shielded by using a shield frame 171 provided on frame member 151.

Shield frame 171 is structured such that it extends from base frame area 153 of frame member 151 as shown in Fig. 12. In view of manufacturing technique and necessary cost, it is preferred that frame member 151 having shield frame 171 is formed by press work. It is possible, however, to manufacture a frame having similar structure by other manufacturing technique.

### (Functions · Effects)

By this structure also, similar functions and effects as Embodiments 1 and 2 above can be obtained. Further, as the shielding property of circuit components provided on main substrate 110 is improved, reliability of the portable telephone can further be improved.

### (Embodiment 8)

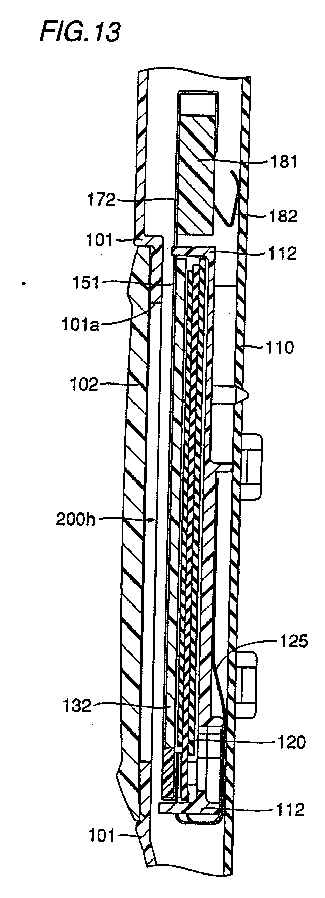

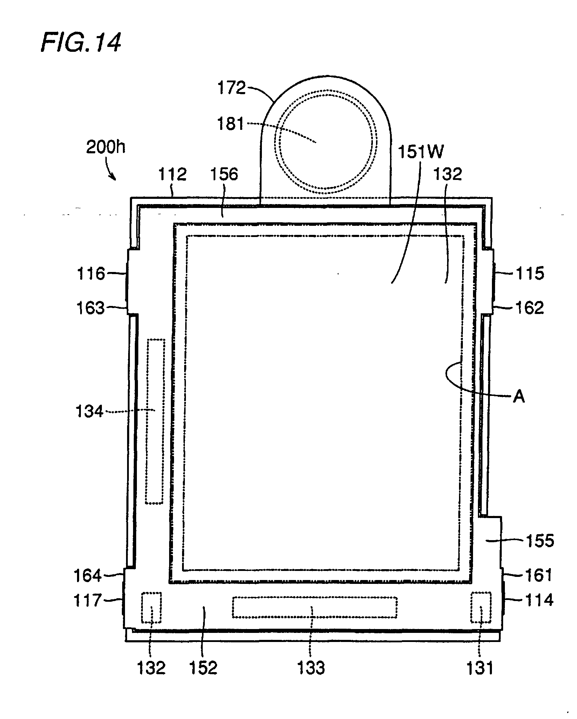

Referring to Figs. 13 and 14, the liquid crystal display in accordance with Embodiment 8 of the present invention will be described. Fig. 13 is a vertical section representing the structure of the liquid crystal display including front light unit 200h of the present embodiment, and Fig. 14 is a plan view representing the structure of the liquid crystal display including front light unit 200h.

### (Structure)

The basic structure of the liquid crystal display and front light unit 200h of the present embodiment is the same as that of liquid crystal display 100a and front light units 200a to 200g in accordance with Embodiments 1 to 7 described above. The difference is as follows. In front light unit 200h, a holding frame 172 for holding a receiver 181 is provided on frame member 151. Receiver 181 is provided with a terminal 182 that is in contact with main substrate 110.

The holding frame 172 is structured to be extended from frame member 151 as shown in Figs. 13 and 14. In view of manufacturing technique and necessary costs, it is preferred that frame member 151 having holding frame 172 is formed by press work. It is possible, however, to manufacture the frame having similar structure by other manufacturing technique.

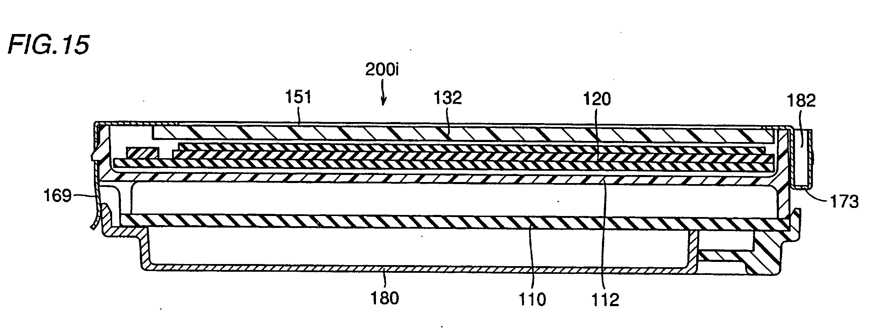

The frame member 151 shown in Fig. 15 has such a structure in that holding frame 173 for holding switch 182 is provided as a circuit component, on frame member 151. Fig. 15 is a cross section representing the structure of the liquid crystal display including front light unit 200i, as a modification of the present embodiment.

### (Functions·Effects)

By the above described structures also, similar functions and effects as Embodiments 1 and 2 described above can be obtained. Further, as holding frames 172, 173 for holding circuit components such as receiver 181 and switch 182 are provided on frame member 151, it becomes possible to incorporate a circuit component such as a receiver in liquid crystal display in advance, and therefore, assembly of the portable telephone can further be facilitated.

### (Embodiment 9)

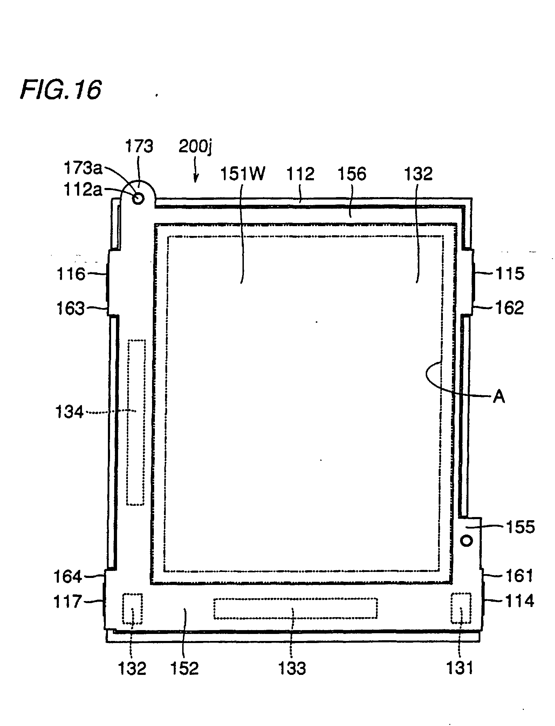

Referring to Fig. 16, the liquid crystal display in accordance with Embodiment 9 of the present invention will be described. Fig. 19 is a vertical section representing the structure of the liquid crystal display including front light unit 200j of the present embodiment.

### (Structure)

The basic structure of the liquid crystal display and front light unit 200j in accordance with the present embodiment is the same as that of liquid crystal display 100a and front light units 200a to 200i in accordance with Embodiments 1 to 8 above. The difference is as follows. In front light unit 200j, in order to ensure positioning of frame member 151 with respect to holder 112, a positioning apparatus for these two members is formed, by providing a positioning pin 112a on holder 112 and providing a positioning hole 173a that receives the positioning pin 112a on frame member 151 (see Fig. 10).

In view of manufacturing technique and necessary cost, it is preferred that the frame member 151 having positioning hole 173a is formed by press work. It is possible, however, to manufacture the frame having similar structure by other manufacturing technique.

### (Functions·Effects)

By the above described structures also, similar functions and effects as Embodiments 1 and 2 above can be obtained. Further, as positioning pin 112a and positioning hole 173a are provided, frame member 151 can surely be positioned with respect to holder 112, and assembly of the liquid crystal display can further be facilitated.

In the embodiments described above, the device of a front light type has been described. Embodiments described above, however, can also be applied to liquid crystal display of back light type.

In the embodiments described above, a liquid crystal display for a portable telephone has been described. The present invention, however, is applicable not only to the portable telephone but also to liquid crystal display used for other electronic equipments.

Although the present invention has been described and illustrated in detail, it is clearly understood that the same is by way of illustration and example only and is not to be taken by way of limitation, the spirit and scope of the present invention.

As described above, in the liquid crystal display in accordance with the embodiments of the present invention, disadvantages in appearance and optical characteristics such as difficulty in viewing the display on the liquid crystal panel caused by generation of bright lines can be avoided, and a liquid crystal display having optically high quality can be provided. Further, at the time of assembly of the liquid crystal display, the front light unit and optical guide plate are accurately positioned on the holder, and therefore, assembly of a portable telephone can be facilitated.

## Claims

1. A liquid crystal display, comprising:
a liquid crystal panel;
a liquid crystal panel holding member holding said liquid crystal panel therein; and
a light unit including light source means and an optical guide plate directing light beams emitted from said light source means to said liquid crystal panel; wherein
said light unit has a frame member holding said light source means and the optical guide plate, and
between said liquid crystal panel holding member and said frame member, engaging means engaged with each other are provided, respectively.

2. The liquid crystal display according to claim 1, wherein
said optical guide plate is arranged on a display surface side of said liquid crystal panel so that light beams emitted from said light source means are directed to said liquid crystal panel.

3. The liquid crystal display according to claim 2, wherein
said frame member has a surrounding frame area extending on a surface side of said optical guide plate, to define a display screen of said liquid crystal panel.

4. The liquid crystal display according to claim 1, wherein
an electronic component is provided on a substrate constituting said liquid crystal panel, and
said frame member has a shield frame area covering said electronic component.

5. The liquid crystal display according to claim 1, having ground potential setting means for setting said frame member to a ground potential.

6. The liquid crystal display according to claim 5, wherein
said frame member includes said ground potential setting means.

7. The liquid crystal display according to claim 1, wherein
said frame member has a holding frame for holding a circuit component.

8. The liquid crystal display according to claim 1, wherein
between said liquid crystal panel holding member and said frame member, positioning means are provided for relative positioning, respectively.
